# EUROPÄISCHE PATENTANMELDUNG

(11) **EP 0 968 754 A1**
(43) Veröffentlichungstag der Anmeldung: **05.01.2000**
(21) Anmeldenummer: 99112537.8
(22) Anmeldetag: 01.07.1999
(51) Int. Cl.: B01D 53/94, B01J 23/46

(54) **Katalysator zur Reduktion von Stickoxiden in oxidierender und reduzierender Atmosphäre**

(30) Priorität: 04.07.1998 DE 19829976
(71) Anmelder: Degussa-Hüls Aktiengesellschaft, 60311 Frankfurt am Main (DE)
(72) Erfinder: Van den Tillaart, Hans, Dr., 63579 Freigericht (DE); Leyrer, Jürgen, Dr., 79618 Rheinfelden (DE); Strehlau, Wolfgang, Dr., 69221 Dossenheim (DE); Lox, Egbert, Dr., 63457 Hanau (DE); Kreuzer, Thomas, Dr., 61184 Karben (DE); Plog, Carsten, Dr., 88677 Markdorf (DE); Andorf, Renato, Dr., 88074 Meckenbeuren (DE); Markert, Norbert, 88090 Immstaad (DE); Stengel, Thomas, 88045 Friedrichshafen (DE)

(57) **Zusammenfassung**

Die Erfindung betrifft einen Katalysator zur Reduktion von Stickoxiden in oxidierender und reduzierender Atmosphäre, welcher Iridium auf einem Trägermaterial enthält. Als Trägermaterial werden Siliziumdioxid oder ein dealuminierter Zeolith in der sauren H-Form mit einem Modul von mehr als 20, bevorzugt mehr als 100, oder Mischungen davon verwendet. Iridium ist auf der äußeren Oberfläche dieser Trägermaterialien mit mittleren Partikelgrößen zwischen 10 und 30 nm abgeschieden. Der Katalysator eignet sich besonders für die Reinigung der Abgase von mager betriebenen Benzinmotoren oder von Dieselmotoren.

## Beschreibung

Die vorliegende Erfindung betrifft einen Katalysator zur Reduktion von Stickoxiden in oxidierender und reduzierender Atmosphäre. Der Katalysator enthält Iridium auf einem Trägermaterial.

In Anlehnung an Dieselmotoren wird jetzt auch bei modernen Ottomotoren versucht, den Kraftstoffverbrauch durch Betreiben mit mageren Luft/Kraftstoff-Gemischen zu senken. Von sogenannten Magermotoren, insbesondere solchen mit BenzinDirekteinspritzung, werden Kraftstoffeinsparungen von bis zu 25% gegenüber stöchiometrisch betriebenen Brennkraftmaschinen erwartet. Aber auch Magermotoren weisen Betriebsphasen mit stöchiometrischen oder sogar fetten Luft/Kraftstoff-Verhältnissen auf. Solche Verhältnisse liegen nach dem Kaltstart, bei Beschleunigungen und im Vollastbetrieb vor. Zur Klasse der mager betriebenen Brennkraftmaschinen gehören auch die Dieselmotoren, die fast ausschließlich mit mageren Luft/Kraftstoff-Gemischen betrieben werden.

Ein wesentliches Problem von Magermotoren ist die katalytische Entfernung der im Abgas enthaltenen Stickoxide. Wegen des hohen Sauerstoffgehaltes im Abgas dieser Motoren von bis zu 15 Vol.-% können die im Abgas enthaltenen Stickoxide (NOₓ) nicht ohne weiteres mit den auch im mageren Abgas noch enthaltenen Kohlenwasserstoffen (HC) und Kohlenmonoxid (CO) an einem üblichen Abgaskatalysator umgesetzt werden, da in diesem Fall die reduktiven Komponenten (HC und CO sowie geringe Mengen Wasserstoff H₂) direkt mit Sauerstoff oxidiert werden.

Abgaskatalysatoren für die gleichzeitige Umsetzung von Kohlenwasserstoffen, Kohlenmonoxid und Stickoxiden, sogenannte Dreiwegkatalysatoren, benötigen für die Umsetzung ein stöchiometrisch zusammengesetztes Abgas mit einem Sauerstoffgehalt von etwa 0,7 Vol.-%. Die Abgaszusammensetzung wird gewöhnlich durch die Luftzahl λ beschrieben, welche als das auf stöchiometrische Bedingungen normierte Luft/Kraftstoff-Verhältnis definiert ist. Das Luft/Kraftstoff-Verhältnis gibt an, wieviel Kilogramm Luft für die vollständige Verbrennung von einem Kilogramm Treibstoff benötigt werden. Bei üblichen Kraftstoffen liegt das stöchiometrische Luft/Kraftstoff-Verhältnis bei einem Wert von 14,6, was einer Luftzahl von 1 entspricht.

Zur Umsetzung von Stickoxiden im mageren Abgas wurden zwei alternative Wege beschritten. Mit Hilfe von sogenannten Stickoxid-Speicherkatalysatoren wird versucht, die Stickoxide während des Magerbetriebs der Brennkraftmaschine in Form von Nitraten zu speichern. Bevorzugte Speichermaterialien hierfür sind zum Beispiel die Erdalkalimetalloxide, insbesondere Bariumoxid. Zur Speicherung müssen die Stickoxide, die abhängig von Motorkonstruktion und Motorbetriebsweise zwischen 50 und 90 Vol.-% aus Stickstoffmonoxid bestehen zunächst zu Stickstoffdioxid oxidiert werden, bevor sie mit den Speichermaterialien Nitrate bilden können. Die Oxidation wird überwiegend am Speicherkatalysator selbst vorgenommen, der zu diesem Zweck zum Beispiel mit Platin als katalytisch aktiver Komponente versehen wird.

Je nach Fahrbetrieb muß das Speichermaterial in gewissen Intervallen regeneriert werden. Hierzu muß die Brennkraftmaschine kurzzeitig mit fetten Luft/Kraftstoff-Gemischen betrieben werden. Unter den dann herrschenden reduktiven Abgasbedingungen werden die Nitrate zersetzt und die frei werdenden Stickoxide unter gleichzeitiger Oxidation der reduktiven Komponenten zu Stickstoff umgesetzt. Für die Regeneration des Speichermaterials können zum Teil die Beschleunigungsphasen ausgenutzt werden. Darüber hinaus ist jedoch bei ausbleibenden Beschleunigungen eine gezielte Regenerierung erforderlich, die durch entsprechende Steuerung des Motors realisiert werden muß. Der hierfür benötigte Kraftstoff vermindert die theoretische Kraftstoffersparnis beim Einsatz von Magermotoren.

Derzeitige Speicherkatalysatoren zeigen noch eine hohe Empfindlichkeit gegenüber den im Abgas von Brennkraftmaschinen enthaltenen Schwefeloxiden, die nach Oxidation am Speicherkatalysator zu Schwefeltrioxid mit dem Speichermaterial zu sehr temperaturstabilen Sulfaten reagieren und die Speicherkapazität für die Stickoxide laufend vermindern.

Alternativ zu den Stickoxid-Speicherkatalysatoren wurden Katalysatoren entwickelt, die eine höhere Selektivität als konventionelle Katalysatoren bei der Umsetzung von Stickoxiden mit Kohlenwasserstoffen in einem sauerstoffreichen Abgas aufweisen. Hierzu gehören zum Beispiel Katalysatoren auf Basis von mit Kupfer oder Eisen ausgetauschten Zeolithen oder Iridium enthaltende Katalysatoren. Diese Katalysatoren ermöglichen eine permanente Umsetzung der Stickoxide auch in mageren Abgasen.

Die Aktivität von Reduktionskatalysatoren ist im allgemeinen abhängig vom Sauerstoffgehalt des Abgases und von der Abgastemperatur. So berichten Chajar et al. in Catalysis Letters 28 (1994), 33-40, daß ein Cu-ZSM5-Katalysator seine optimale Reduktionsaktivität bei etwa 0,5 Vol.-% Sauerstoff im Abgas, daß heißt also bei leicht unterstöchiometrischen Bedingung, entfaltet. Bei fehlendem Sauerstoff im Abgas liegt die Umsetzung von NO an diesem Katalysator je nach Abgastemperatur zwischen 2% (bei 250°C) und 8% (bei 500°C).

Neben der Abhängigkeit vom Sauerstoffgehalt des Abgases weisen Reduktionskatalysatoren eine ausgeprägte Temperaturabhängigkeit der Umsetzung der Stickoxide auf. Die Anspringtemperaturen für die Umsetzung der Stickoxide liegen im sauerstoffreichen Abgas bei etwa 350°C. Unter der Anspringtemperatur wird diejenige Temperatur verstanden, bei der die Umsatzrate eines Schadstoffes einen bestimmten Wert, gewöhnlich 50%, erreicht. Mit weiter steigender Abgastemperatur steigt zunächst auch die Umsatzrate für die Stickoxide, durchläuft bei einer bestimmten Temperatur ein Maximum und fällt dann bei Abgastemperaturen oberhalb von 500°C wieder bis nahezu auf Null ab.

Mager betriebene Benzinmotoren und insbesondere Dieselmotoren erreichen im Teillastbetrieb Abgastemperaturen von häufig weniger als 350°C. Es werden daher Katalysatoren benötigt, die ihre maximalen Umsetzungsraten schon bei möglichst niedrigen Abgastemperaturen von weniger als 350, bevorzugt von weniger als 300°C, entwickeln.

Die EP 0 633 052 B1 beschreibt einen Katalysator für die Umsetzung von Stickoxiden in sauerstoffreichen Abgasen, der ein kristallines Iridiumsilikat mit einem Si/Ir-Atomverhältnis von 50 bis 800 und einem Si/Al-Verhältnis von nicht weniger als 15 umfaßt. Bei einem Sauerstoffgehalt des Abgases von 3,5 Vol.-% liegen die maximalen Umsetzungsraten dieses Katalysators bei Abgastemperaturen von wenigstens 430°C und sind daher wenig geeignet für den beschriebenen Einsatzfall. Aufgrund des gewählten Herstellungsverfahrens für diesen Katalysator liegt eine definierte Verbindung zwischen dem Silikat und Iridium vor, was zu einer sehr homogenen und atomaren Verteilung des Iridiums in dieser Verbindung führt.

Die EP 0 832 688 A1 beschreibt einen Katalysator, der Iridium, Schwefel und gegebenenfalls Platin als katalytisch aktive Substanzen enthält. Iridium und Schwefel können bei diesem Katalysator auf einem gemeinsamen Trägermaterial, zum Beispiel Aluminiumoxid, aufgebracht werden. Alternativ kann auch ein Metallsulfat als Träger für Iridium eingesetzt werden. Nach dem Imprägnieren des Trägermaterials mit Iridiumchlorid wird das Material getrocknet und bei 500°C calciniert, so daß das Iridium auf dem Trägermaterial in feinen Partikeln vorliegt. Der Katalysator wird zur Entfernung von Stickoxiden aus oxidierenden Abgasen verwendet.

In der DE 196 19 791 A1 wird ein Katalysator beschrieben, der Iridium, ein Alkalimetall und mindestens ein Metallkarbid und/oder Metallnitrid als Träger umfaßt. Iridium und das Alkalimetall werden hier zum Beispiel durch gleichzeitiges Imprägnieren des Trägermaterials mit löslichen Vorläuferverbindungen von Iridium und dem Alkalimetall auf dem Träger aufgebracht. Bei einem Luft/Kraftstoff-Verhältnis von 23 liegt bei diesem Katalysator die Temperatur für maximalen Umsatz der Stickoxide etwa bei 350°C.

Die JP 07080315 A1 offenbart ebenfalls einen Katalysator zur Entfernung von Stickoxiden aus oxidierenden Abgasen von Magermotoren und Dieselmotoren. Der Katalysator enthält als aktive Komponente Iridium auf einem Trägermaterial. Als Trägermaterial dienen unter anderem Siliziumdioxid und die Zeolithe Y, X, A, ZSM-5, Mordenit und Sillimanit.

Aufgabe der vorliegenden Erfindung ist es, einen Katalysator für die Reduktion von Stickoxiden zur Verfügung zu stellen, der sich durch ein Maximum der Umsatzraten bei niedrigen Abgastemperaturen auszeichnet und außerdem eine ausgezeichnete Resistenz gegenüber einer Vergiftung durch die im Abgas enthaltenen Schwefeloxide aufweist. Darüber hinaus, soll dieser Katalysator den variierenden Bedingungen eines Magermotors gewachsen sein und sowohl im mageren als auch im fetten Betrieb ausreichend hohe Aktivitäten für die Reduktion der Stickoxide besitzen.

Diese Aufgabe wird gelöst durch einen Katalysator zur Reduktion von Stickoxiden in oxidierender und reduzierender Atmosphäre, welcher Iridium auf einem Trägermaterial aus Siliziumdioxid oder aus Zeolithen enthält. Der Katalysator ist dadurch gekennzeichnet, daß das Iridium auf der äußeren Oberfläche des Trägermaterials mit einer mittleren Partikelgröße zwischen 5 und 30, bevorzugt zwischen 10 und 25 nm, vorliegt.

Dieser Katalysator weist überraschenderweise schon bei sehr niedrigen Abgastemperaturen von weniger als 350°C und einem Sauerstoffgehalt des Abgases von 8 Vol.-% optimale Umsetzungsraten für Stickoxide von über 70% auf. Ein Sauerstoffgehalt von 8 Vol.-% entspricht etwa einer Luftzahl λ des Abgases von 1,5. Stöchiometrische Abgasbedingungen liegen bei einem Sauerstoffgehalt von etwa 0,7 Vol.-% vor.

Wichtig für den erfindungsgemäßen Katalysator ist die Tatsache, daß Iridium auf einem hoch siliziumdioxidhaltigen Material als Träger mit einer relativ großen Partikelgröße zwischen 10 und 30 nm auf der äußeren Oberfläche des Trägers aufgebracht ist. Als Trägermaterial werden daher Siliziumdioxid selber oder ein dealuminierter Zeolith in der sauren H-Form verwendet. Bevorzugt wird ein Zeolith ZSM-5 mit einem Molverhältnis (auch als Modul bezeichnet) von Siliziumdioxid zu Aluminiumoxid von mehr als 20, bevorzugt von mehr als 100, verwendet.

Zeolithe sind oxidische Silizium-Aluminiumverbindungen mit einer speziellen Kristallstruktur. Sie weisen die allgemeine Zusammensetzung

M_{2/n}O·Al₂O₃·xSiO₂·yH₂O

auf, wobei M für ein Kation mit der Valenzzahl n steht und x das Modul bezeichnet. Das Modul ist stets größer oder gleich 2. Die Kationen M dienen zum Ladungsausgleich im Gitter des Zeolithen. Sie können durch Ionenaustausch durch andere Ionen ersetzt werden. In diesem Fall nimmt das neue Ion den Platz des auszutauschenden Ions innerhalb der mikroporösen Struktur des Zeolithen ein. Die Menge der auf diese Weise in den Zeolithen einzubauenden Ionen ist also durch die Ionenaustauschkapazität begrenzt.

Zeolithe kommen häufig in ihrer Na⁺ oder H⁺-Form in den Handel. Die theoretische Ionenaustauschkapazität eines Zeolithen hängt direkt mit der Menge der Anionen im Gitter zusammen. Zur Erhöhung ihrer hydrothermalen Stabilität können die Zeolithe durch spezielle Maßnahmen dealuminiert werden. Je nach Typ des verwendeten Zeolithen resultieren dann Zeolithe mit Modulen von weit über 100. Mit der Dealuminierung nimmt jedoch auch der Gehalt des Zeolithen an Kationen ab, da mit geringerem Aluminiumoxidgehalt auch nur noch ein geringer Ladungsausgleich erforderlich ist. Dementsprechend sinkt bei dealuminierten Zeolithen die Ionenaustauschkapazität drastisch ab.

Die niedrigen Temperaturen für die optimale Umsetzung der Stickoxide beim erfindungsgemäßen Katalysator waren vor dem Hintergrund der EP 0 633 052 B1 unerwartet, da der dort beschriebene Katalysator aus einem Iridiumsilikat besteht, welches die Grundstruktur eines Zeolithen aufweist. Gemäß dieser Schrift wird das Iridium zum Beispiel direkt bei der Herstellung des Zeolithen in den Zeolithen eingebaut. Der Zeolith dient hier also nicht mit seiner spezifischen Oberfläche als Träger für Iridiumkristallite, sondern bildet mit Iridium eine chemische Verbindung. Iridium ist also in diesem Material auf atomarer Ebene feinst verteilt.

Die vorliegende Erfindung beschreitet einen völlig anderen Weg. Zeolith oder Siliziumdioxid werden als Trägermaterialien eingesetzt, auf deren äußerer Oberfläche Iridium abgeschieden wird.

Für die Ausstattung der als Träger verwendeten Zeolithe mit Iridium wird also kein Einbau des Iridiums in das Gitter des Zeolithen oder Ionenaustausch angewendet. Diese Techniken würden einerseits die Zugänglichkeit des katalytisch aktiven Iridiums für die Reaktanden aus den Abgasen behindern, andererseits wären die Mengen des Iridiums, mit denen die Zeolithe ausgestattet werden könnten durch die geringe Ionenaustauschkapazität der dealuminierten Zeolithe stark eingeschränkt.

Gemäß der vorliegenden Erfindung wird daher das katalytisch aktive Iridium durch Imprägnieren mit zum Beispiel einer wäßrigen Lösung von löslichen Vorläuferverbindungen des Iridiums auf der äußeren Oberfläche der Zeolithe abgeschieden. Als besonders vorteilhaft hat sich hierfür die sogenannte Porenvolumenimprägnierung bewährt, bei der die Vorläuferverbindungen in einer Menge Wasser aufgelöst werde, welche 70 bis 100% der zuvor bestimmten Wasseraufnahmekapazität der Zeolithe entspricht. Diese Lösung wird über die in einem Kessel umgewälzten Zeolithe ausgebracht. Das feuchte Pulver wird bei erhöhter Temperatur getrocknet. Sollte die Löslichkeit der Vorläuferverbindung nicht ausreichend sein, um die gewünschte Beladung des Trägermaterials mit Iridium in einem einzigen Imprägnierschritt zu gewährleisten, so kann das Material mehrfach imprägniert werden.

Das imprägnierte Trägermaterial wird nach der Trocknung bei 300 bis 500°C für die Dauer von 1 bis 4 stunden zur Zersetzung der Vorläuferverbindungen des Iridiums in einer reduzierenden Atmosphäre, bevorzugt unter Formiergas (5 Vol.-% H₂; 95 Vol-% N₂), calciniert.

Überraschenderweise wurde festgestellt, daß zur Erzielung optimaler katalytischer Aktivität die Iridiumpartikel auf der Oberfläche des Trägermaterials nicht, wie bei Platinkatalysatoren üblich, hochdispers verteilt sein müssen. Vielmehr wird eine bestimmte Mindestgröße der Partikel benötigt. Optimale Aktivitäten werden für mittlere Partikelgrößen zwischen 10 und 30 nm erzielt. Bei mittleren Partikelgrößen unter 10 nm vermindert sich die Reduktionsaktivität des Katalysators. Er wirkt dann mit abnehmender Partikelgröße zunehmend nur noch als Oxidationskatalysator für Kohlenmonoxid und die Kohlenwasserstoffe. Mittlere Partikelgrößen über 50 nm führen ebenfalls zu einer Verminderung der katalytischen Aktivität.

Es wurde gefunden, daß die Partikelgröße durch Wahl der Calcinierungsbedingungen beeinflußt werden kann. Zur Einstellung von Partikeldurchmessern im Bereich zwischen 10 und 30 nm ist es erforderlich, unter reduzierenden Bedingungen zu calcinieren. Die Calcinationstemperatur sollte im Bereich zwischen 300 und 500°C liegen. Die optimalen Calcinierungsbedingungen können vom Fachmann leicht durch Kontrolle der erzielten Partikeldurchmesser mit einem Transmissions-Elektronenmikroskop festgelegt werden.

Eine weitere Funktion der Calcinierung unter reduzierenden Bedingungen ist die Entfernung von Chlor aus dem Katalysator, welches durch die bevorzugte Vorläuferverbindung von Iridium, nämlich Iridiumchlorid, in den Katalysator eingebracht wird. Es wurde gefunden, daß nur durch Calcinierung in einer reduzierenden Gasphase hochaktive Katalysatoren erhalten werden. Eine naßchemische Reduktion führt zu schlechten Ergebnissen.

Auf die beschriebene Weise können die Trägermaterialien mit 0,01 bis 5 Gew.-% Iridium, bezogen auf das Gesamtgewicht des Katalysators, beladen werden. Unterhalb von 0,01 Gew.-% ist die Konzentration des Iridiums im Katalysator für eine effektive Umsetzung der Stickoxide zu gering. Oberhalb von 5 Gew.-% nimmt das Partikelwachstum wegen der hohen Konzentrationen zu, so daß das katalytische Potential des Iridiums nicht mehr optimal genutzt werden kann.

Der Katalysator wird bevorzugt in Form einer Beschichtung auf die Wandflächen der Strömungskanäle von Wabenkörpern aus Keramik oder Metall aufgebracht. Solche Wabenkörper werden standardmäßig als Tragkörper für Autoabgaskatalysatoren verwendet. Sie weisen eine Vielzahl von parallelen Strömungskanälen für das Abgas auf. Die Anzahl der Strömungskanäle pro Quadratzentimeter Querschnittsfläche der Wabenkörper wird als Zelldichte bezeichnet. Die Zelldichte üblicher Wabenkörper liegt zwischen 10 und 250 cm⁻². Als Tragkörper für den Katalysator können jedoch auch andere Strukturen wie zum Beispiel offenzellige Schäume verwendet werden. Der Katalysator wird auf diesen Tragkörpern in Konzentrationen von 30 bis 300 Gramm pro Liter Volumen der Tragkörper aufgebracht.

Zur Verbesserung der Haftung des Katalysators auf den Tragkörpern können ihm noch weitere oxidische Komponenten wie Aluminiumoxid, Titanoxid, Zirkonoxid oder Mischungen davon in Mengen bis 50 Gew.-%, bezogen auf das Gesamtgewicht des Katalysators, zugesetzt werden.

Die Erfindung wird durch die folgenden Beispiel noch näher erläutert. Es zeigen
- Figur 1:: Stickoxid-Umsatz für den Katalysator nach Beispiel 1 in Abhängigkeit von der Abgastemperatur für verschiedene Gehalte des Abgases an Sauerstoff
- Figur 2:: Stickoxid-Umsatz für den Katalysator nach Beispiel 1 in Abhängigkeit von der Abgastemperatur vor und nach der Belastung mit Schwefeldioxid
- Figur 3:: Stickoxid-Umsatz für den Katalysator nach Beispiel 3 in Abhängigkeit von der Abgastemperatur für verschiedene Gehalte des Abgases an Sauerstoff

### Beispiel 1:

Zur Herstellung eines Iridiumkatalysators auf einem Zeolithen wurde ein ZSM5-Zeolith in der H-Form mit einem Modul von 300 ausgewählt und eine Imprägnierlösung durch Kochen von 0,92 g IrCl₃·3H₂O in 100 ml Wasser unter Rückfluß für die Dauer von 24 Stunden angefertigt.

50 g des Zeolithen wurden mit einer Menge der Imprägnierlösung versetzt, die genau vom Träger aufgenommen wurde. Die feuchte Masse wurde bei 125°C getrocknet und die Imprägnierung so oft wiederholt, bis die gesamte Lösung auf dem Träger aufgebracht worden war. Das so erhaltene Pulver wurde in einem Reduktionsofen bei 450°C für die Dauer von 6 Stunden mit Formiergas (5 Vol.-% Wasserstoff; Rest Stickstoff) bei einem Gasstrom von 5 Nl/min reduziert. Der fertige Katalysator enthielt 1 Gew.-% Iridium, bezogen auf sein Gesamtgewicht.

Der so hergestellte Katalysator wurde als wäßrige Dispersion in einer Kugelmühle homogenisiert. Anschließend wurde die Dispersion mit 36 Masseteilen Bindemittel (Wasserglas) je 100 Teile Katalysator versetzt und mit Wasser auf eine Feststoffkonzentration von 300 g/l verdünnt.

Zur Beschichtung eines Wabenkörpers aus Cordierit mit einer Zelldichte von 62 cm⁻² wurde dieser in die Dispersion getaucht, anschließend die überschüssige Dispersion mit Druckluft aus den Kanälen geblasen und dann im Trockenschrank getrocknet. Der beschichtete Wabenkörper wies eine Beschichtungskonzentration von 300 Gramm pro Liter des Wabenkörpers auf. Der beschichtete Wabenkörper wurde bei 450°C für die Dauer von 6 stunden im Formiergas reduziert.

### Beispiel 2:

Es wurde ein weiterer Katalysator wie in Beispiel 1 hergestellt. Anstelle von ZSM5 mit einem Modul von 300 wurde ein ZSM5-Zeolith mit einem Modul von 27 verwendet.

Der Katalysator wurde wie in Beispiel 1 beschrieben auf einen Wabenkörper aufgetragen.

### Beispiel 3:

Es wurde ein weiterer Katalysator wie in Beispiel 1 hergestellt. Anstelle von ZSM5 mit einem Modul von 300 wurde reines Siliziumdioxid verwendet.

Der Katalysator wurde wie in Beispiel 1 beschrieben auf einen Wabenkörper aufgetragen.

### Anwendungsbeispiel:

Die Stickoxidumsätze der Katalysatoren der obigen Beispiele wurden in einer Synthesegasanlage in Abhängigkeit der Abgastemperatur für verschiedene Sauerstoffkonzentrationen des Abgases ermittelt. Hierfür kam eine synthetisches Abgas mit einem Wassergehalt von 10 Vol.-%, einer Stickoxidkonzentration von 270 ppm und einer Propenkonzentration von 1650 ppm in Stickstoff zum Einsatz. Die Wabenkörper wurden mit einer Raumgeschwindigkeit von 51000 h⁻¹ belastet.

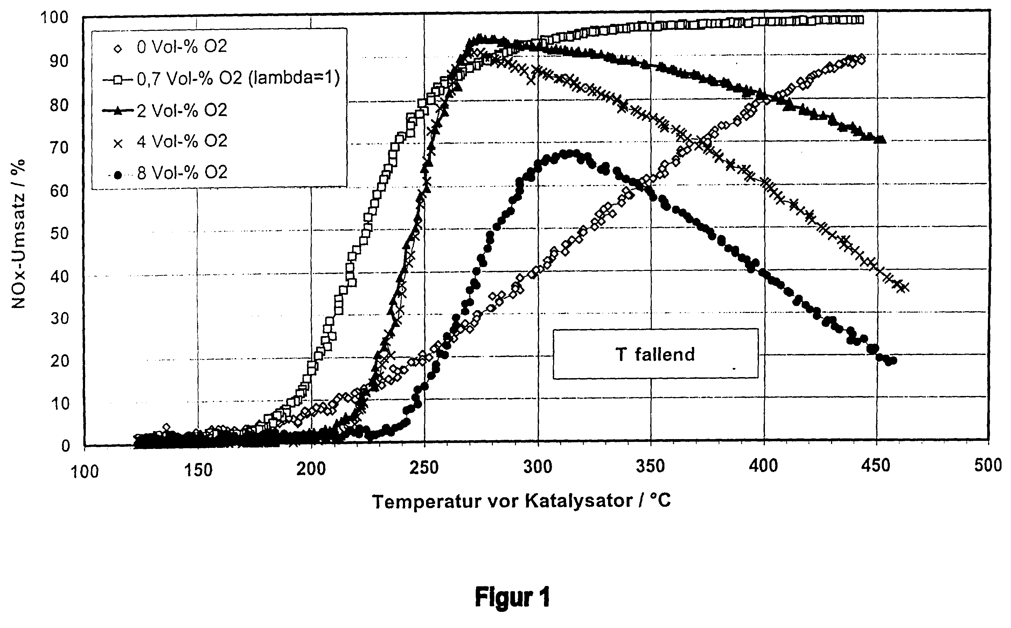

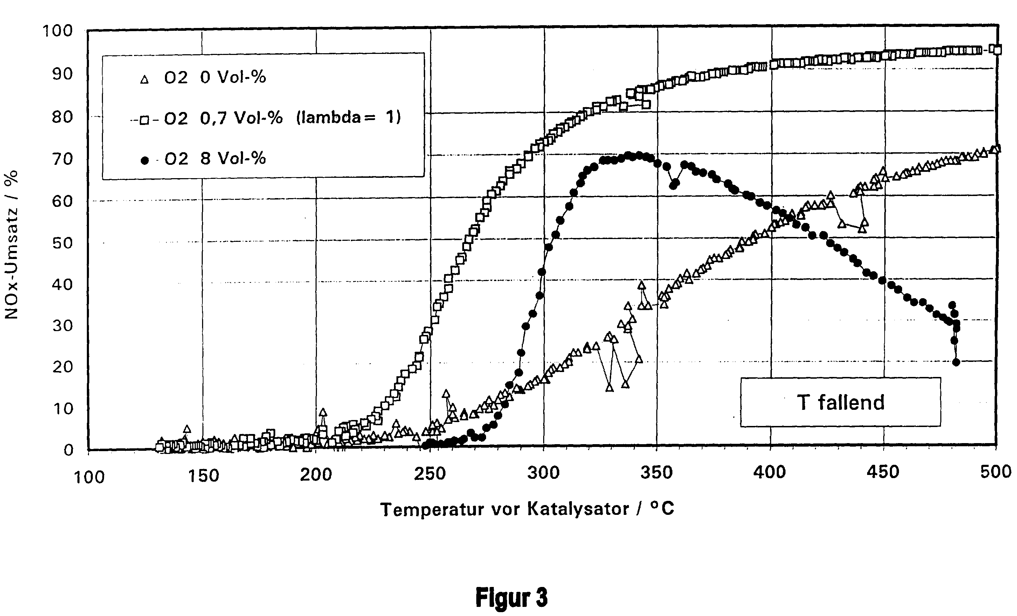

Die Figuren 1 und 3 zeigen die gemessenen Umsatzkurven für die Katalysatoren der Beispiele 1 und 3.

Am Ir-ZSM5-Katalysator (Modul 300) wird bei einem Sauerstoffgehalt von 8 Vol.-%, entsprechend einer Luftzahl von etwa 1,5 (oxidierende Bedingungen), eine Anspringtemperatur für einen Stickoxidumsatz von 30% von 270°C beobachtet (Figur 1). Das Umsatzmaximum liegt bei 320°C und beträgt 65%. Der Temperaturbereich, in dem Stickoxidumsätze über 30% erreicht werden, erstreckt sich von 270 bis 420°C. Bei einem Sauerstoffgehalt von 0,7 Vol.-%, entsprechend einer Luftzahl von 1 (stöchiometrische Bedingungen), beträgt die Anspringtemperatur für einen Stickoxidumsatz von 50% etwa 225°C. Bei Temperaturen über 275°C liegt der Stickoxidumsatz über 90%.

Am Ir-SiO₂-Katalysator (Figur 3) wird bei einem Sauerstoffgehalt von 8 Vol.-% eine Anspringtemperatur für 30% Stickoxidumsatz von 290°C beobachtet. Das Umsatzmaximum tritt bei 340°C auf und beträgt 70%. Der Temperaturbereich, in dem die Stickoxidumsätze über 30% liegen, erstreckt sich von 290°C bis 480°C. Bei einem Sauerstoffgehalt von 0,7 Vol.-% liegt die Anspringtemperatur für einen Stickoxidumsatz von 50% bei cirka 270°C. Bei Temperaturen über 380°C liegt der Stickoxidumsatz über 90%.

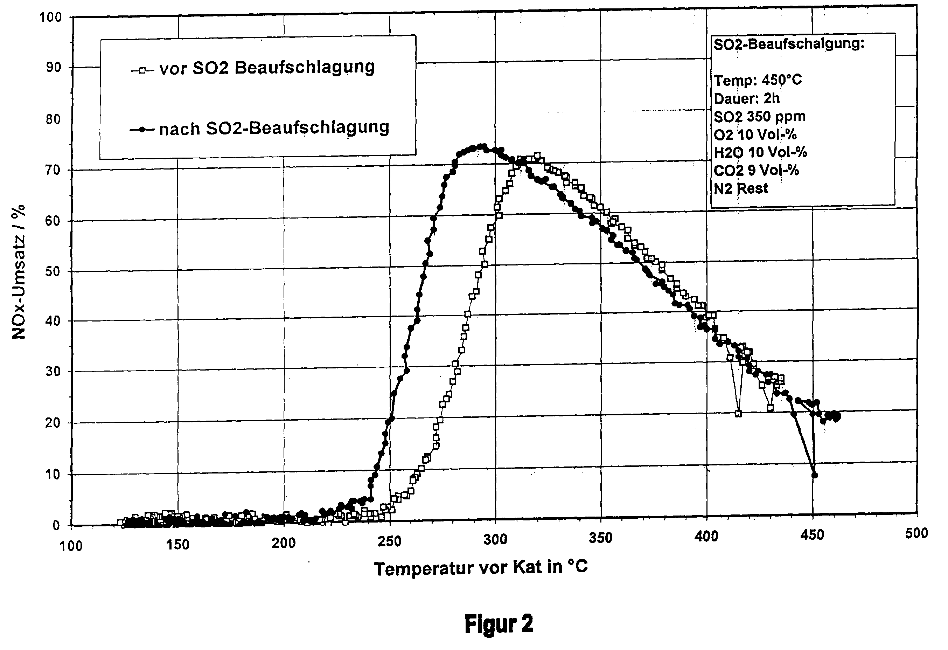

Figur 2 zeigt den Einfluß von Schwefeldioxid im Abgas auf die katalytische Aktivität für den Katalysator von Beispiel 1 (Ir-ZSM5 mit Modul 300). Bei diesem Katalysator wird nach Belastung mit 350 Vol.-ppm Schwefeldioxid in Luft für die Dauer von 2 Stunden und bei einer Temperatur von 450°C keine Desaktivierung festgestellt. Vielmehr wird eine leichte Verschiebung der Anpringtemperaturen und der Temperaturen für maximalen Stickoxidumsatz zu niedrigeren Werten hin beobachtet.

## Patentansprüche

1. Katalysator zur Reduktion von Stickoxiden in oxidierender und reduzierender Atmosphäre, welcher Iridium auf einem Trägermaterial aus Siliziumdioxid oder aus Zeolithen enthält,
**dadurch gekennzeichnet,**
daß das Iridium auf der äußeren Oberfläche des Trägermaterials mit einer mittleren Partikelgröße zwischen 5 und 30 nm vorliegt.

2. Katalysator nach Anspruch 1,
**dadurch gekennzeichnet,**
daß als Trägermaterial ein dealuminierter Zeolith in der sauren Form (H-Form) verwendet wird.

3. Katalysator nach Anspruch 2,
**dadurch gekennzeichnet,**
daß es sich bei dem dealuminierten Zeolithen um ZSM5 mit einem Modul von mehr als 20, bevorzugt mehr als 100 handelt.

4. Katalysator nach einem der vorstehenden Ansprüche,
**dadurch gekennzeichnet,**
daß er in Form einer Beschichtung auf die Wandflächen der Strömungskanäle eines Wabenkörpers aus Keramik oder Metall in einer Konzentration von 50 bis 300 g pro Liter des Wabenkörpers aufgebracht ist.

5. Katalysator nach Anspruch 4,
**dadurch gekennzeichnet,**
daß die Beschichtung des Wabenkörpers als weitere Komponenten Aluminiumoxid, Titanoxid, Zirkonoxid, Aluminiumsilicat oder Mischungen davon enthält.

6. Verfahren zur Herstellung eines Katalysators nach einem der Ansprüche 1 bis 5 durch Imprägnieren des Trägermaterials mit einer löslichen Vorstufe des Iridiums, Trocknen des imprägnierten Materials und Calcinieren in einem Wasserstoff enthaltenden Gasstrom bei einer Temperatur zwischen 300 und 500°C für die Dauer von 1 bis 10 Stunden.

7. Verwendung des Katalysators nach einem der vorstehenden Ansprüche für die Reinigung der Abgase von Benzin- oder Dieselmotoren.
